# EUROPÄISCHE PATENTANMELDUNG

(11) **EP 3 925 501 A1**
(43) Veröffentlichungstag der Anmeldung: **22.12.2021**
(21) Anmeldenummer: 20180782.3
(22) Anmeldetag: 18.06.2020
(51) Int. Cl.: A47L 7/00, A47L 9/20, B23Q 11/00

(54) **STAUBSAMMELVORRICHTUNG FÜR EINE WERKZEUGMASCHINE**

(71) Anmelder: Hilti Aktiengesellschaft, 9494 Schaan (LI)
(72) Erfinder: Plank, Uto, 85354 Freising (DE)
(74) Vertreter: Hilti Aktiengesellschaft Corporate Intellectual Property

(57) **Zusammenfassung**

Die vorliegende Erfindung betrifft eine Staubsammelvorrichtung für eine Werkzeugmaschine, wobei die Staubsammelvorrichtung einen Lamellenfilter und eine drehbare Welle aufweist. In dem Sammelbehälter der Staubsammelvorrichtung können die Lamellen des Filters durch eine Drehbewegung der Welle in eine axiale Bewegung versetzt werden, die dann unterbrochen wird, wenn die Filterlamellen in den Bereich von Freigabemitteln der Welle gelangen. Die Freigabemittel ermöglichen die Rückkehr der Lamellen in ihre Ursprungsposition, wobei durch die Rücckehr der Lamellen in diese Ursprungsposition eine Erschütterung der Lamellen bewirkt wird, die zu einer Abreinigung des Filters führt. In weiteren Aspekten betrifft die Erfindung eine Werkzeugmaschine, die eine vorgeschlagene Staubsammelvorrichtung aufweist, sowie ein Verfahren zum Betrieb einer Werkzeugmaschine und zur Abreinigung eines Filters.

## Beschreibung

Die vorliegende Erfindung betrifft eine Staubsammelvorrichtung für eine Werkzeugmaschine, wobei die Staubsammelvorrichtung einen Lamellenfilter und eine drehbare Welle aufweist. In dem Sammelbehälter der Staubsammelvorrichtung können die Lamellen des Filters durch eine Drehbewegung der Welle in eine axiale Bewegung versetzt werden, die dann unterbrochen wird, wenn die Filterlamellen in den Bereich von Freigabemitteln der Welle gelangen. Die Freigabemittel ermöglichen die Rückkehr der Lamellen in ihre Ursprungsposition, wobei durch die Rücckehr der Lamellen in diese Ursprungsposition eine Erschütterung der Lamellen bewirkt wird, die zu einer Abreinigung des Filters führt. In weiteren Aspekten betrifft die Erfindung eine Werkzeugmaschine, die eine vorgeschlagene Staubsammelvorrichtung aufweist, sowie ein Verfahren zum Betrieb einer Werkzeugmaschine und zur Abreinigung eines Filters.

### Hintergrund der Erfindung:

Im Stand der Technik sind Werkzeugmaschinen bekannt, bei denen Staub, der bei der Arbeit mit der Werkzeugmaschine entsteht, durch eine interne Staubabsaugung abgesaugt werden kann. Der gesammelte Staub kann beispielsweise in einer Staubsammelvorrichtung innerhalb der Werkzeugmaschine aufgefangen bzw. bis zu einer Leerung der Vorrichtung gesammelt werden. Die Werkzeugmaschine mit Staubabsaugung können Filter, insbesondere Kleinstfilter, aufweisen, um aus dem Luftstrom Gesteins- und/oder Staubpartikel abzuscheiden. Bei diesen Filtern handelt es sich häufig um Filter, die Lamellen aufweisen. Diese werden im Sinne der Erfindung vorzugsweise als "Lamellenfilter" bezeichnet. Erfahrungsgemäß können sich diese Filter leicht mit Staub oder groben Schmutz zusetzen, was nachteiligerweise dazu führen kann, dass die Staubabsaugung an Leistung verliert oder die Absaugkanäle verstopfen. Insbesondere kann das unerwünschte Zusetzen des Filters dazu führen, dass eine Befüllungskapazität der Staubsammelvorrichtung nicht optimal genutzt werden kann.

Im Stand der Technik sind verschiedene Verfahren bekannt, mit denen ein Filter in einer Staubsammelvorrichtung einer Werkzeugmaschine abgereinigt werden kann. Die meisten dieser Verfahren stellen mechanische Abreinigungsverfahren dar, die mit einer Reihe von Nachteilen behaftet sind. Beispielsweise wird im Stand der Technik vorgeschlagen, die Lamellen des Filters abzukehren, um den Filter zu reinigen. Allerdings kann es passieren, dass sich die dafür verwendete Kehrvorrichtung nicht mehr bewegen kann, wenn die Sammelvorrichtung mit Staub gefüllt ist. Dadurch kann nachteiligerweise die Funktionsfähigkeit der Filterabreinigung beeinträchtigt werden. Ferner kann es zu Beschädigungen an einzelnen Bestandteilen der Staubsammelvorrichtung kommen, wenn die Staubbox teilweise oder ganz mit Staub befüllt ist. Als Kehrvorrichtungen sind im Stand der Technik beispielsweise Abstreifer, Schieber oder Bürsten bekannt.

Ferner wird im Stand der Technik ein Abklopfen der gesamten Staubsammelvorrichtung vorgeschlagen. Allerdings führt dieses Abklopfen der gesamten Staubbox häufig zu mechanischen Beeinträchtigungen der Staubsammelvorrichtung oder ihrer Komponenten. Das Abklopfen der Staubsammelvorrichtung wirkt bei den bekannten Lösungen überwiegend auf das Gehäuse des Sammelbehälters und führt oft nicht zu einer ausreichenden Abreinigung des Filters.

Eine weitere Abreinigungsmöglichkeit, die aus dem Stand der Technik bekannt ist, besteht darin, den Filter durch einen Umkehr-Luftstrom "abzublasen". Dabei wird die Strömungsrichtung des Absaug-Luftstroms durch ein Abschalten oder eine Reduzierung des Unterdrucks umgekehrt, so dass der Filter für einen kurzen Moment von einem Luftstrom durchströmt wird, dessen Richtung entgegengesetzt ist zu der üblichen Strömungsrichtung im Absaugfall. Allerdings hat sich gezeigt, dass die Filterabreinigung durch einen Umkehr-Luftstrom insbesondere dann nicht hilft und zu dem gewünschten Effekt führt, wenn größere Staub- oder Gesteinsbrocken in dem Strömungskanal verklemmt vorliegen. Denn üblicherweise ist der Umkehr-Luftstrom zumeist nicht stark genug, um verklemmte Staub- oder Gesteinsbrocken aus dem Strömungskanal zu lösen bzw. zu befreien. Nachteilig an der Abreinigung durch einen Umkehr-Luftstrom ist ferner, dass in dem Moment der Unterdruckunterbrechung auch die Staubabsaugung unterbrochen werden muss. In diesem Abreinigungszeitraum ist der Nutzer der Werkzeugmaschine der vollen Staubbelastung ausgesetzt, die bei der Arbeit mit der Werkzeugmaschine entsteht.

Es ist somit ein Anliegen der vorliegenden Erfindung eine Vorrichtung zur verbesserten Abreinigung des Filters in einer Staubsammelvorrichtung bereitzustellen. Darüber hinaus soll mit der Erfindung eine Werkzeugmaschine mit einer bereitzustellenden Staubsammelvorrichtung abgegeben werden, sowie ein Verfahren zum Betrieb einer Werkzeugmaschine bzw. ein Verfahren zur Abreinigung eines Filters in einer Staubsammelvorrichtung in einer Werkzeugmaschine. Mit der Erfindung sollen die vorstehend beschriebene Nachteile und Mängel des Standes der Technik überwunden und insbesondere eine effiziente und wirksame Abreinigung des Filters in einer Staubsammelvorrichtung einer Werkzeugmaschine ermöglicht werden. Die Abreinigung soll ausreichend stark sein, um beispielsweise Staub- oder Gesteinsbrocken zu befreien, die sich in einem Strömungskanal der Werkzeugmaschine verklemmt haben. Es würde von der Fachwelt begrüßt werden, wenn eine etwaige mechanische Belastung, die mit der Abreinigung einhergeht, auf den Bereich des Filters und umliegender Komponenten beschränkt bliebe und insbesondere nicht auf das Gehäuse wirkt. Darüber hinaus soll es mit der Erfindung möglich sein, auf die Verwendung von unflexiblen und/oder wartungsanfälligen Kehrvorrichtungen zu verzichten.

Die Aufgabe wird durch den Gegenstand der unabhängigen Ansprüche gelöst. Vorteilhafte Ausführungsformen zum Gegenstand des unabhängigen Anspruchs finden sich in den abhängigen Unteransprüchen.

### Beschreibung der Erfindung:

Die Aufgabe wird gelöst durch eine Staubsammelvorrichtung für eine Werkzeugmaschine, wobei die Staubsammelvorrichtung einen Sammelbehälter zur Aufnahme des Staubes aufweist. Die Staubsammelvorrichtung ist dadurch gekennzeichnet, dass in dem Sammelbehälter ein Filter mit Lamellen und eine drehbare Welle angeordnet vorliegen, wobei die Lamellen des Filters durch eine Drehbewegung der Welle in eine axiale Bewegung aus einer Ursprungsposition heraus versetzbar sind, wobei die Welle Freigabemittel aufweist, die eine Rückkehr der Lamellen in ihre Ursprungsposition ermöglichen, wobei durch die Rückkehr der Lamellen in ihre Ursprungsposition eine Abreinigung des Filters erfolgt. Es ist im Sinne der Erfindung insbesondere bevorzugt, dass durch die Rückkehr der Lamellen in ihre Ursprungsposition eine Erschütterung der Lamellen hervorgerufen wird, die zu einer Abreinigung des Filters führt. Insofern wird mit der Erfindung eine Reinigungsmöglichkeit für einen Lamellenfilter vorgestellt, wobei mit dem Lamellenfilter ein staubbeladener Luftstrom in einer Werkzeugmaschine gefiltert werden kann. Durch die kompakte, mechanische und einfach zu bedienende Konstruktion wird mit der Erfindung vorteilhafterweise eine besonders robuste und wartungsarme Staubbox für eine Werkzeugmaschine bereitgestellt. Tests haben gezeigt, dass die Erfindung eine kostengünstige technische Lösung zur Filterabreinigung darstellt, die insbesondere ohne eine spezielle Kehrvorrichtung, ein Abklopfen der gesamten Staubbox oder einen Umkehr-Luftstoß auskommt. Somit wendet sich die vorgeschlagene Staubsammelvorrichtung von solchen Lösungen, die aus dem Stand der Technik bekannt sind, ab und beschreitet neue Wege im Bereich der Abreinigung eines Filters in einer Staubsammelvorrichtung in einer Werkzeugmaschine.

Es ist im Sinne der Erfindung bevorzugt, dass die Welle und der Filter bzw. seine Lamellen in einem formschlüssigen Eingriff miteinanderstehen. Durch diesen zumindest vorübergehenden Kontakt zwischen den Lamellen des Filters und der drehbaren Welle kann die Drehbewegung der Welle in eine axiale Bewegung des Filters bzw. der Filterlamellen umgewandelt werden. Vorzugsweise erfolgt die axiale Bewegung im Wesentlichen parallel zu einer zentralen Achse der Welle. Der Begriff "im Wesentliche parallel" stellt für den Fachmann dabei keinen unklaren Begriff dar, weil der Fachmann weiß, dass mit der Formulierung eine Bewegung der Filterlamellen im Wesentlichen parallel zu einer Achsrichtung der Welle gemeint ist, wobei kleinere Abweichungen von der exakten mathematischen Parallelität zu tolerieren sind.

Es ist im Sinne der Erfindung ganz besonders bevorzugt, dass die Welle eine vorzugsweise wendelartig profilierte Schraubenfläche oder ein Gewinde aufweist, wobei die Schraubenfläche in Eingriff gelangen kann mit den Lamellen des Filters. Es ist im Sinne der Erfindung bevorzugt, dass das Vorhandensein der wendelartig ausgebildeten Schraubenfläche bzw. des Gewindes an der Welle mit der Formulierung, dass die Welle Windungen aufweist, umschrieben werden kann. Durch den Kontakt der Schraubenfläche der Welle mit den Lamellen des Filters können die Lamellen in Achsrichtung der Welle bewegt werden, wenn sich die Welle dreht. Die Welle ist vorzugsweise im Wesentlichen horizontal in dem Sammelbehälter der Werkzeugmaschine angeordnet und kann von außen über einen Drehgriff in Drehung versetzt werden. Diese Drehung stellt diejenige Drehbewegung der Welle dar, mit der die Lamellen des Filters in eine axiale Bewegung versetzt werden können. Insbesondere können die einzelnen Lamellen des Filters von den Windungen der Welle mitgeführt werden, so dass die Rotationsbewegung der Welle in eine axiale Bewegung der einzelnen Lamellen des Filters umgewandelt wird. Der Drehgriff kann beispielsweise mit einem Befestigungsmittel, wie einer Schraube, an der Welle befestigt werden. Insbesondere kann die vorgeschlagene Staubsammelvorrichtung ein Gehäuse aufweisen, wobei der Drehgriff beispielsweise in einer Vertiefung des Gehäuses drehbar gelagert werden kann. Das Gehäuse kann aus zwei Teilhälften bestehen, die zu dem Gesamtgehäuse der Staubsammelvorrichtung zusammengefügt werden können. Das Gehäuse bzw. seine zwei Teilhälften bilden bzw. umschließen vorteilhafterweise einen geschlossenen Hohl- oder Innenraum, in dem der Staub, der bei Betrieb einer Werkzeugmaschine entsteht, gesammelt werden kann. Die vorgeschlagene Staubsammelvorrichtung kann insbesondere als Komponente einer Werkzeugmaschine ausgebildet sein. Die vorgeschlagene Staubsammelvorrichtung kann im Sinne der Erfindung vorzugsweise als "Staub-box" oder als "*Dust Removal-Modul*" bezeichnet werden.

Wenn bei Betrieb der Werkzeugmaschine Staub anfällt, kann dieser Staub mittels einer Staubabsaugung, die ebenfalls Bestandteil der Werkzeugmaschine sein kann, abgesaugt werden. Dazu kann die Staubabsaugung einen Unterdruck erzeugen, mit dem ein Luftstrom erzeugt werden kann, mit dem der Staub aus einem Arbeitsbereich der Werkzeugmaschine entfernt werden kann. Der staubbeladene Luftstrom wird vorzugsweise in Richtung der Staubsammelvorrichtung geführt. Die Staubsammelvorrichtung weist vorzugsweise eine Öffnung auf, durch die der Luftstrom in die Staubsammelvorrichtung eintreten kann. Es ist im Sinne der Erfindung bevorzugt, dass der Filter in diesem Öffnungs- oder Eingangsbereich der Staubsammelvorrichtung vorliegt. Es kann passieren, dass sich der Filter bei langanhaltendem Betrieb der Werkzeugmaschine oder bei einer hohen Staubbeladung des Luftstroms zusetzt. In diesem Fall bildet sich beispielsweise ein fester Filterkuchen aus, der dazu führen kann, dass die Absaugung an Saugleistung verliert und die Ansaugkanäle verstopfen. Außerdem kann durch das Zusetzen des Filters ggf. die Kapazität der Staubsammelvorrichtung bzw. ihres Sammelbehälters nicht optimal genutzt werden.

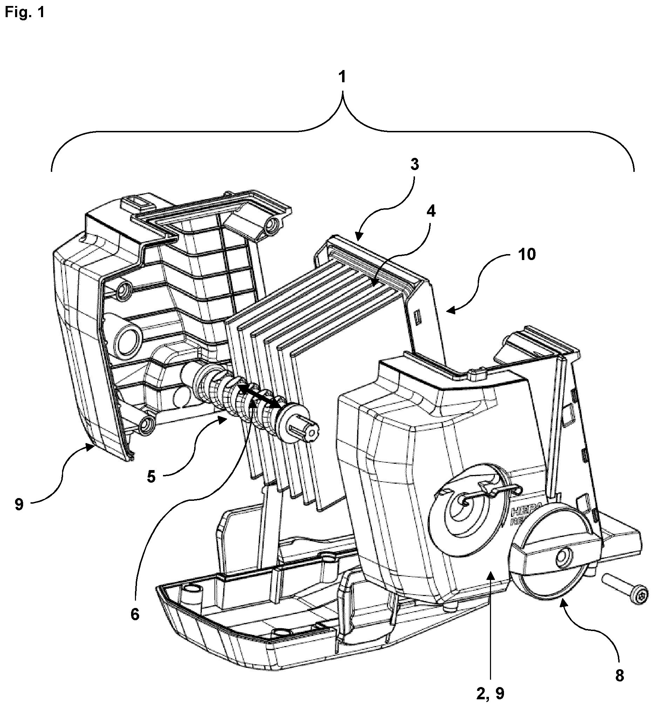

Vorteilhafterweise kann mit der Erfindung eine Möglichkeit für eine schnelle und effektive Abreinigung des Filters bereitgestellt werden. Es ist im Sinne der Erfindung bevorzugt, dass der Abreinigungsvorgang durch eine Betätigung eines Drehgriffs der Staubsammelvorrichtung gestartet wird. Vorzugsweise wird durch die Betätigung des Drehgriffs die Welle innerhalb des Sammelbehälters der Staubsammelvorrichtung in eine Drehung versetzt. Es ist im Sinne der Erfindung bevorzugt, dass die Welle Schraubenflächen aufweist, die in Eingriff gelangen können mit Lamellen des Filters bzw. mit den Freiräumen zwischen den Filterlamellen. Aufgrund der Gestaltung der Welle mit Schraubenflächen kann die Welle im Sinne der Erfindung vorzugsweise auch als Förder- oder Schneckenwelle bezeichnet werden. Mit anderen Worten ist es im Sinne der Erfindung bevorzugt, dass die Welle als Schneckenwelle ausgebildet ist und Windungen aufweist. Es ist im Sinne der Erfindung bevorzugt, dass die Drehbewegung der Welle in eine axiale Bewegung der Lamellen des Filters umgewandelt werden kann. Dies geschieht insbesondere dadurch, dass die Windungen der Welle formschlüssig in Eingriff mit den Lamellen des Filters bzw. mit den Freiräumen zwischen den Filterlamellen vorliegen können. Mit anderen Worten können die Windungen in Zwischenräume zwischen den Filterlamellen eingreifen, so dass die Lamellen bei einer wiederholten Drehung der Welle von deren Windungen mitgenommen bzw. mitgeführt werden. Diese Mitnahme der Lamellen wird im Sinne der Erfindung als "axiale Bewegung" bezeichnet. Die axiale Bewegung ist in Fig. 1 als Doppelpfeil dargestellt.

Vor Beginn der Drehbewegung liegen die Lamellen in Bezug auf die Welle bzw. deren Windungen in einer Ursprungs- oder Ausgangsposition vor. Durch die axiale Bewegung werden die Filterlamellen aus ihrer Ausgangsposition herausbewegt, insbesondere entlang einer Achsrichtung der Welle. Beispielsweise können sich die Lamellen durch ihre axiale Bewegung in seitlicher Richtung um einen Länge d nach rechts oder links bewegen. Die Länge d stellt dann vorzugsweise den Abstand einer Lamelle zu ihrer Ausgangsposition dar. Es ist im Sinne der Erfindung bevorzugt, dass jede Lamelle eine eigene Ursprungsposition aufweist. Beispielsweise kann die Welle drei bis zehn Windungen aufweisen. Es hat sich gezeigt, dass Wellen mit fünf Windungen besonders gut für die Zwecke der Erfindung geeignet sind. Es ist im Sinne der Erfindung bevorzugt, dass die Anzahl der Windungen der Welle mit einer Anzahl der Lamellen des Filters korreliert. Diese Korrelation kann im Sinne der Erfindung bedeuten, dass die Anzahl der Windungen der Welle mit der Anzahl der Lamellen des Filters gleich ist. Es ist im Sinne der Erfindung aber ganz besonders bevorzugt, dass die Anzahl der Lamellen des Filters um den Betrag 1 größer ist als die Anzahl der Windungen der Welle. Dadurch ist es vorteilhafterweise möglich, dass jede Wellenwindung in einen Zwischenraum zwischen den Filterlamellen eingreifen und die Lamelle während der Drehbewegung der Welle mitführen kann. Dadurch wird vorzugsweise die axiale Bewegung der Welle erzeugt, die zum Zurückspringen und zur Abreinigung des Filters führt. Mit anderen Worten kann es im Sinne der Erfindung bevorzugt sein, dass die Welle eine Anzahl von n Windungen und der Filter eine Anzahl von n+1 Lamellen aufweist. Es ist im Sinne der Erfindung ganz besonders bevorzugt, dass eine Gewindesteigung der Welle mit einem Abstand der Lamellen übereinstimmt.

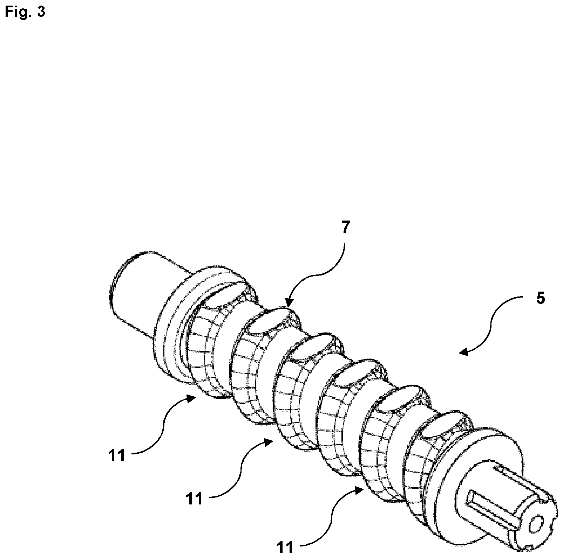

Es ist im Sinne der Erfindung bevorzugt, dass die Welle Freigabemittel umfasst. Diese Freigabemittel können als Schlüsselflächen ausgebildet sein. Mit anderen Worten kann die Welle Schlüsselflächen als Freigabemittel aufweisen. Vorzugsweise können die Schlüsselflächen als flache oder eben ausgebildete Flächenbereiche ausgebildet sein, wobei vorzugsweise je Windung der Welle eine Schlüsselfläche vorgesehen ist. Eine mögliche Ausgestaltung der Welle mit als Schlüsselflächen ausgebildeten Freigabemitteln ist in Fig. 3 dargestellt. Insbesondere können die Schlüsselflächen die Windungen in einem Teilbereich der Windung nach außen abschließen. Es ist im Sinne der Erfindung bevorzugt, dass die Lamellen des Filters in ihre Ursprungsposition zurückkehren, wenn sich die Schlüsselflächen der Welle über den Lamellen des Filters befinden. Das bedeutet im Sinne der Erfindung bevorzugt, dass die Mitnahme der Lamellen im Bereich der Schlüsselflächen endet und die Lamellen in ihre ursprüngliche Ausgangssituation zurückspringen oder zurückschnellen können, da sie von den bevorzugt eben ausgebildeten Schlüsselflächen nicht mehr gehalten werden. Durch das Zurückspringen bzw. Zurückschnellen kommt es vorzugsweise zu einer Erschütterung der Filterlamellen, wodurch der Staub bzw. Filterkuchen von den Lamellen gelöst und/oder abgeschüttelt werden kann. Insbesondere ermöglicht die Erschütterung eine wirksame und effiziente (Ab-)Reinigung der Filterlamellen bzw. des Filters.

Es ist im Sinne der Erfindung bevorzugt, dass die Lamellen des Filters von der Welle bzw. deren Windungen freigegeben werden, wenn die Lamellen in den Bereich der Schlüsselflächen der Welle gelangen. Durch die Freigabe können die Lamellen in ihre frühere Position zurückspringen oder zurückschnellen. Diese zumeist ruckartige Bewegung führt dann vorteilhafterweise zu einer Erschütterung der Lamellen, durch die sich die im verstopften oder zugesetzten Filter der Staub bzw. der Filterkuchen lösen kann. Insbesondere wird durch das vorteilhafte Zusammenwirken der drehbaren Welle und dem Filter eine Abreinigungswirkung hervorgerufen.

Es ist im Sinne der Erfindung bevorzugt, dass der Sammelbehälter einen Drehgriff aufweist, mit dem die Welle in eine Drehung versetzt werden kann. Mit anderen Worten ist es im Sinne der Erfindung bevorzugt, dass der Drehgriff dazu eingerichtet ist, die Welle in eine Drehung zu versetzen. Diese Drehbewegung kann insbesondere durch eine bevorzugt manuelle Betätigung durch den Nutzer der Werkzeugmaschine erfolgen. Es kann in einer alternativen Ausgestaltung der Erfindung auch bevorzugt sein, dass die Welle von Antriebsmitteln angetrieben wird. Dazu kann ein Elektromotor vorgesehen sein, der mit einem Schalter aktiviert oder deaktiviert werden kann. Dieser Schalter kann in der alternativen Ausgestaltung der Erfindung in dem Bereich am Gehäuse der Staubsammelvorrichtung angeordnet sein, in dem in der "manuellen Ausgestaltung" der Erfindung der Drehgriff vorgesehen ist. Der Schalter kann aus ergonomischen Gründen aber auch an verschiedenen anderen Stellen angeordnet vorliegen.

Die Erfindung ist vorzugsweise in dem technischen Gebiet der Staubentfernung aus einem Arbeitsbereich einer Werkzeugmaschine angesiedelt. Der Arbeitsbereich der Werkzeugmaschine stellt vorzugsweise denjenigen Bereich dar, in dem die mit der Werkzeugmaschine zu verrichtende Arbeit geleistet wird. Dies erfolgt zumeist unter Zuhilfenahme eines Werkzeugs. Wenn es sich bei der Werkzeugmaschine beispielsweise um einen Bohrhammer handelt, kann das Werkzeug zum Beispiel von einem Bohr- oder Meißelwerkzeug gebildet werden. Der Bereich, in dem das Bohr- oder Meißelwerkzeug als Werkzeug der Werkzeugmaschine in Kontakt mit einem zu bearbeitenden Untergrund gelangt, wird im Sinne der Erfindung vorzugsweise als "Arbeitsbereich der Werkzeugmaschine" bezeichnet. Es ist im Sinne der Erfindung bevorzugt, dass in diesem Arbeitsbereich der Staub entsteht, der vorzugsweise mit Hilfe der vorliegenden Erfindung gesammelt werden soll. Dazu kann die Werkzeugmaschine eine Staubabsaugung umfassen. Es ist im Sinne der Erfindung bevorzugt, dass die Staubabsaugung eine Vorrichtung darstellt, die dazu eingerichtet ist, einen Luftstrom bzw. einen Unterdruck zu erzeugen und den Staub, der im Arbeitsbereich der Werkzeugmaschine bei deren Betrieb entstehen kann, mit dem Luftstrom abzusaugen.

Die Erfindung betrifft in zweiten Aspekt eine Werkzeugmaschine mit einer Staubabsaugung zum Abführen von Partikel aus einem Arbeitsbereich der Werkzeugmaschine. Es ist insbesondere vorgesehen, dass die Werkzeugmaschine eine vorgeschlagene Staubsammelvorrichtung aufweist. Die Werkzeugmaschine ist dadurch gekennzeichnet, dass in dem Sammelbehälter der Staubsammelvorrichtung ein Filter mit Lamellen und eine drehbare Welle angeordnet vorliegt, wobei die Lamellen des Filters durch eine Drehbewegung der Welle in eine Bewegung aus einer Ursprungsposition heraus versetzt werden können, wobei die Welle Freigabemittel aufweist, die dazu eingerichtet sind, eine Rückkehr der Lamellen in ihre Ursprungsposition zu ermöglichen, wobei durch die Rückkehr der Lamellen in ihre Ursprungsposition eine Erschütterung der Lamellen hervorgerufen wird. Es stellt einen wesentlichen Vorteil der vorgeschlagenen Staubsammelvorrichtung dar, dass diese Erschütterung zu einer Abreinigung des Filters führt.

Es ist im Sinne der Erfindung bevorzugt, dass die Werkzeugmaschine eine Staubabsaugung umfasst, wobei die Staubabsaugung dazu eingerichtet ist, einen Luftstrom zu erzeugen, mit dem Staub abgeführt wird. Die Staubabsaugung wird insbesondere dazu verwendet, dass der Staub aus dem Arbeitsbereich der Werkzeugmaschine abgesaugt werden kann. Dazu ist die Staubabsaugung der Werkzeugmaschine vorzugsweise dazu eingerichtet, einen Unterdruck zu erzeugen, der wiederum einen Luftstrom erzeugt. Mit diesem Luftstrom kann der Staub aus dem Arbeitsbereich der Werkzeugmaschine entfernt und in Richtung der Staubsammelvorrichtung geführt werden. Vorzugsweise ist in der Werkzeugmaschine ein Strömungskanal für den Luftstrom vorgesehen, durch den der Luftstrom von dem Arbeitsbereich zu der Staubsammelvorrichtung geführt wird. Vorzugsweise kann der Staub, der bei Betrieb der Werkzeugmaschine entsteht, in einem Sammelbehälter der Staubsammelvorrichtung gesammelt werden. Bei Eintritt in die Staubsammelvorrichtung ist es im Sinne der Erfindung bevorzugt, dass der Luftstrom gefiltert wird. Dazu kann im Eingangsbereich der Staubsammelvorrichtung bzw. des Sammelbehälters der Staubsammelvorrichtung ein Filter vorgesehen sein. Der Filter weist Lamellen auf, wobei ein wesentliches Verdienst der Lamellen darin besteht, die Oberfläche des Filters zu vergrößern und so die Filterleistung des Filters zu erhöhen. Dadurch kann der Luftstrom besonders wirksam gefiltert und von gröberen Staubpartikeln befreit werden.

Es ist im Sinne der Erfindung ganz besonders bevorzugt, dass der Filter dazu eingerichtet ist, Staub und/oder Staubpartikel aus einem in den Sammelbehälter der vorgeschlagenen Staubsammelvorrichtung führenden Luftstrom herauszufiltern. Es ist mit anderen Worten im Sinne der Erfindung bevorzugt, dass der Filter am Eingangsbereich des Sammelbehälters vorliegt, wobei der Luftstrom in diesem Eingangsbereich bevorzugt in den Sammelbehälter einmündet. Vorzugsweise stellt der Eingangsbereich des Sammelbehälters denjenigen Bereich des Sammelbehälters dar, in dem der Luftstrom in den Sammelbehälter eintritt und noch voll beladen mit Staub, Partikeln und/oder Gesteinsstückchen ist. Indem diese gröberen Staubpartikel aus dem Luftstrom herausgefiltert werden, kann die Funktionsweise der vorgeschlagenen Staubsammelvorrichtung verbessert und ihre Lebensdauer verlängert werden.

In einem weiteren Aspekt betrifft die Erfindung ein Verfahren zum Betrieb einer Werkzeugmaschine und zur Abreinigung eines Filters. Das Verfahren ist durch folgende Verfahrensschritte gekennzeichnet:
a) Betrieb der vorgeschlagenen Werkzeugmaschine, wobei Staub, der bei Betrieb der Werkzeugmaschine entsteht, mittels eines Luftstroms abgeführt wird,
b) Filtern des Staubs aus dem Luftstrom,
c) Initiierung der Abreinigung des Filters durch Betätigung eines Drehgriffs an der Staubsammelvorrichtung, wobei durch die Betätigung des Drehgriffs eine Welle innerhalb der Staubsammelvorrichtung in eine Drehung versetzt wird,
d) Übertragung der Drehbewegung der Welle in eine axiale Bewegung von Lamellen des Filters, wobei die Lamellen des Filters durch die axiale Bewegung eine Ursprungsposition verlassen,
e) Rückkehr der Lamellen des Filters in ihre Ursprungsposition, wenn die Lamellen in einen Bereich von Freigabemitteln der Welle gelangen,
f) Abreinigung des Filters durch die Rückkehr der Lamellen in ihre Ursprungsposition.

Es ist im Kontext des vorgeschlagenen Filterabreinigungsverfahrens bevorzugt, dass der Staub durch eine Staubabsaugung der Werkzeugmaschine aus einem Arbeitsbereich der Werkzeugmaschine abgesaugt werden kann. Dies wird insbesondere dadurch erreicht, dass von der Staubabsaugung ein Luftstrom erzeugt wird, mit dem der Staub aus dem Arbeitsbereich der Werkzeugmaschine abgeführt werden kann. Vorzugsweise wird der Staub in dem Sammelbehälter der Staubsammelvorrichtung gesammelt, wobei der Luftstrom beim Eintritt in den Sammelbehälter einen Filter passiert. Dabei kann es geschehen, dass sich der Filter bei langanhaltendem Betrieb der Werkzeugmaschine oder bei einer hohen Staubbeladung des Luftstroms zusetzt. Beispielsweise kann sich ein sogenannter Filterkuchen in dem Filter ausbilden. In dieser Situation ermöglicht die Erfindung vorteilhafterweise die Initiierung einer Abreinigung des Filters, wobei die Filterabreinigung insbesondere durch Betätigung eines Drehgriffs an einer Außenseite der Staubsammelvorrichtung gestartet wird. Beispielsweise kann der Drehgriff in einer Vertiefung des Gehäuses drehbar gelagert sein.

Es ist im Sinne der Erfindung bevorzugt, dass durch die Betätigung des Drehgriffs die Welle innerhalb der Staubsammelvorrichtung in eine Drehung versetzt wird. Die vorzugsweise als Schneckenwelle ausgebildete Welle kann Windungen aufweisen, wobei die Windungen vorzugsweise in Eingriff gelangen können mit den Lamellen des Filters. Mit anderen Worten kann die Schneckenwelle formschlüssig in Eingriff mit den Filterlamellen stehen, wobei der formschlüssige Eingriff insbesondere zwischen den Windungen der Welle und den Lamellen des Filters besteht. Es ist im Sinne der Erfindung bevorzugt, dass eine Drehbewegung der Welle in eine axiale Bewegung von Lamellen des Filters umgewandelt wird, wobei die Lamellen des Filters durch die axiale Bewegung ihre Ursprungsposition verlassen. Es stellt ein wesentliches Merkmal der Erfindung dar, dass die Welle Freigabemittel aufweist, die eine Rückkehr der Lamellen des Filters in ihre Ursprungsposition ermöglichen, wenn die Filterlamellen in einen Bereich der Freigabemittel der Welle gelangen. Dies ist insbesondere dann der Fall, wenn sich die Freigabemittel bzw. Schlüsselflächen der Welle über den Lamellen des Filters befinden. Die Abreinigung des Filters kann vorteilhafterweise durch eine Erschütterung der Lamellen des Filters erfolgen, wobei die Erschütterung durch die Rückkehr der Lamellen in ihre Ursprungsposition hervorgerufen wird.

Die Definitionen, technischen Wirkungen und Vorteile, die für die vorgeschlagene Staubsammelvorrichtung beschrieben wurden, gelten für das Betriebs- und Abreinigungsverfahren, sowie für die Werkzeugmaschine analog.

Weitere Vorteile der Erfindung ergeben sich aus der folgenden Figurenbeschreibung. In der Figur ist eine beispielhafte Ausführungsform der vorliegenden Erfindung dargestellt. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer bevorzugten Ausführungsform der vorgeschlagenen Staubsammelvorrichtung (Explosionszeichnung)
- Fig. 2: Ansicht einer bevorzugten Ausführungsform der vorgeschlagenen Staubsammelvorrichtung im geschlossenen Zustand
- Fig. 3: Ansicht einer bevorzugten Ausführungsform der Welle mit Windungen und Freigabemitteln

### Ausführungsbeispiele und Figurenbeschreibung:

Fig. 1 zeigt die Ansicht einer bevorzugten Ausführungsform der vorgeschlagenen Staubsammelvorrichtung (1). Insbesondere zeigt Fig. 1 eine Explosionszeichnung der Staubsammelvorrichtung (1). Von oben links nach unten rechts zeigt Fig. 1 eine erste Hälfte des Gehäuses (9) der Staubsammelvorrichtung (1) bzw. des Sammelbehälters (2), den Filter (3) und dessen Lamellen (4), sowie die Welle (5) mit den Freigabemittel (7), eine zweite Hälfte des Gehäuses (9) der Staubsammelvorrichtung (1) bzw. des Sammelbehälters (2), sowie den Drehgriff (8).

Es ist im Sinne der Erfindung bevorzugt, dass die beiden Teilhälften des Gehäuses (9) ein Raumvolumen umschließen, wobei in diesem geschlossenen Raumvolumen Staub aufgefangen und gesammelt werden kann. Insofern bilden die beiden Teilhälften des Gehäuses (9) vorzugsweise den Sammelbehälter (2) der Staubsammelvorrichtung (1). Der untere Bereich des Sammelbehälters (2) kann von einem Boden bzw. einer Schale gebildet werden. Ausgehend von dieser Unterseite des Sammelbehälters (2) kann sich eine Vorderseite der Staubsammelvorrichtung (1) erstrecken, in der ein Filter (3) angeordnet sein kann. Es ist im Sinne der Erfindung bevorzugt, dass die Vorderseite der Staubsammelvorrichtung (1) den Eingangsbereich (10) der Staubsammelvorrichtung (1) bildet, in den der staubbeladene Luftstrom mündet. Insbesondere kann der Filter (3) in einer Filteraufnahme angeordnet vorliegen. Bei dem Filter (3) handelt es sich vorzugsweise um einen Lamellenfilter, also bevorzugt um einen Filter (3), der Lamellen (4) aufweist. In dem in Fig. 1 dargestellten Ausführungsbeispiel der Erfindung weist der Filter (3) beispielsweise sechs Lamellen (4) auf, wobei sich zwischen den Lamellen (4) fünf Zwischenräume befinden. Es ist im Sinne der Erfindung bevorzugt, dass die Windungen (11) einer Welle (5) in die Freiräume zwischen den Lamellen (4) des Filters (3) eingreifen können.

Die beiden Teilhälften des Gehäuses (9) können Öffnungen zur Aufnahme dieser Welle (5) aufweisen. Insbesondere kann die Welle (5) innerhalb der Staubsammelvorrichtung (1) drehbar gelagert sein, wobei die Welle (5) insbesondere durch einen Drehgriff (8) in Drehung versetzt werden kann. Der Drehgriff (8) kann beispielsweise von außen zugänglich sein und von einem Nutzer der Werkzeugmaschine (nicht dargestellt) manuell betätigt werden. Dazu kann der Nutzer den Drehgriff (8) insbesondere drehen. Der Drehgriff (8) ist innerhalb des Gehäuses (9) der Staubsammelvorrichtung (1) vorzugsweise drehbar gelagert. Dazu kann das Gehäuse (9) oder eines seiner Teilhälften eine Vertiefung zur Aufnahme des Drehgriffs (8) aufweisen. Vorteilhafterweise ist der Drehgriff (8) von außerhalb der Staubsammelvorrichtung (1) leicht zugänglich.

Durch die Betätigung des Drehgriffs (8) wird die Welle (5) in eine Drehbewegung versetzt. Wenn sich die Windungen (11) der Welle (5) formschlüssig in Eingriff mit den Lamellen (4) des Filters (3) bzw. mit den Freiräumen zwischen den Lamellen (4) des Filters (3) befinden, erfolgt eine Mitnahme der Lamellen (4) durch die Windungen (11) der Welle (5), wenn sich die Welle (5) dreht. Vor der Mitnahme der Lamellen (4) durch die Windungen (11) befinden sich die Filterlamellen (4) bevorzugt in einer Ausgangs- oder Ursprungsposition. Die Mitnahme der Filterlamellen (4) durch die Windungen (11) erzeugt eine axiale Bewegung (6) der Lamellen (4) des Filters (3), die in Fig. 1 als Doppelpfeil dargestellt ist. Der Doppelpfeil deutet an, dass sich die Lamellen (4) des Filters (3) durch die Mitnahme durch die Windungen (11) der Welle (5) beispielsweise in Richtung der ersten Teilhälfte des Gehäuses (9) der Staubsammelvorrichtung (1) bewegen können. Die axiale Bewegung (6) der Filterlamellen (4) erfolgt vorzugsweise im Wesentlichen parallel zu einer zentralen Achse, die gedacht durch die Welle (5) verläuft. Es ist im Sinne der Erfindung bevorzugt, dass die Mitnahme der Filterlamellen (4) endet, wenn die Lamellen (4) des Filters (3) in den Bereich der Freigabemittel (7) der Welle (5) gelangen. Bei den Freigabemitteln (7) kann es sich beispielsweise um ebene Flächen am höchsten Punkt einer Windung (11) der Welle (5) handeln. Vorzugsweise weist jede Windung (11) der Welle (5) eine solche ebene Fläche auf, wobei diese ebenen Flächen im Sinne der Erfindung bevorzugt als Schlüsselflächen bezeichnet werden. Wenn sich die Schlüsselflächen (7) der Welle (5) über den Lamellen (4) des Filters (3) befinden, werden die Filterlamellen (4) freigegeben. Das bedeutet im Sinne der Erfindung bevorzugt, dass die Lamellen (4) des Filters (3) in ihre Ausgangsposition zurückspringen können. Diese Rückbewegung der Filterlamelle, (4) kann beispielsweise in Richtung der zweiten Teilhälfte des Gehäuses (9) der Staubsammelvorrichtung (1) erfolgen, wobei durch dieses Zurückschnellen der Lamellen (4) des Filters (3) diejenige Erschütterung hervorgerufen werden kann, die vorteilhafterweise dazu führt, dass sich Staub und Filterkuchen von den Lamellen (4) lösen und der Filter (3) abgereinigt wird. Mit anderen Worten kann es durch das Zurückspringen der Filterlamellen (4) in ihre Ausgangsposition insbesondere zu einer Erschütterung der Filterlamellen (4) kommen, durch die Staub und Filterkuchen vom Filter (3) gelöst werden. Der gelöste Staub bzw. Filterkuchen kann in den Sammelbehälter (2) der Staubsammelvorrichtung (1) fallen und mit der nächsten Leerung des Sammelbehälters (2) entsorgt werden.

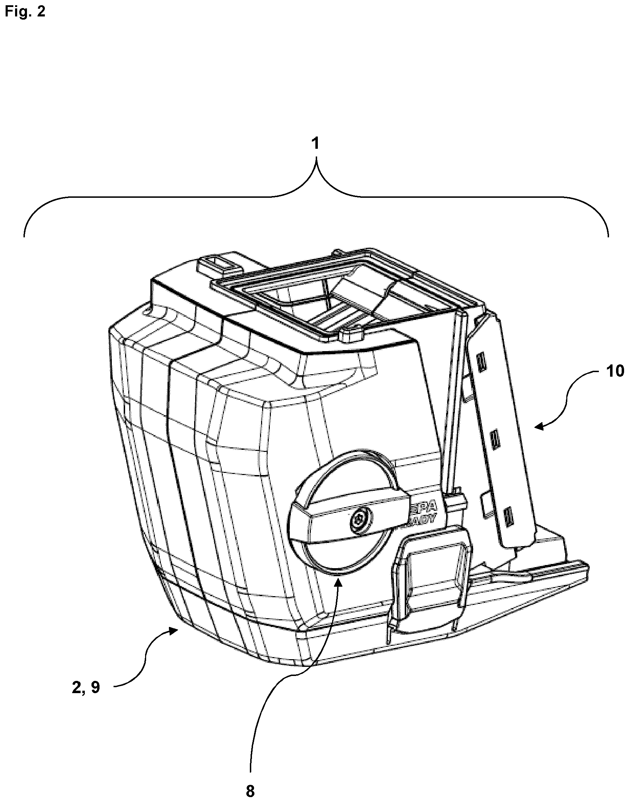

Fig. 2 zeigt die Ansicht einer bevorzugten Ausführungsform der vorgeschlagenen Staubsammelvorrichtung (1) in einem geschlossenen Zustand. Insbesondere liegen die beiden Teilhälften des Gehäuses (9) der Staubsammelvorrichtung (1) miteinander verbunden vor, so dass sie den geschlossenen Sammelbehälter (2) bilden, der zur Aufnahme von Staub und dergleichen ausgebildet ist. Bei dem in Fig. 2 dargestellten Ausführungsbeispiel der Erfindung ist auch der Drehgriff (8) zu sehen, der in der zweiten Teilhälfte des Gehäuses (9) der Staubsammelvorrichtung (1) vorliegt.

Fig. 3 zeigt eine Ansicht einer bevorzugten Ausführungsform der Welle (5) mit Windungen (11) und Freigabemitteln (7). Die in Fig. 3 abgebildete Welle (5) weist insbesondere fünf Windungen (11) auf, die mit den Zwischenräumen der Filterlamellen (4) in Eingriff gelangen bzw. zusammenwirken können, um eine Drehbewegung der Welle (5) in eine axiale Bewegung (6) der Lamellen (4) umzuwandeln. Deutlich zu sehen sind in Fig. 3 auch die Freigabemittel (7), die in dem in Fig. 3 dargestellten Ausführungsbeispiel der Erfindung insbesondere als Schlüsselflächen ausgebildet sind. Insbesondere sind in Fig. 3 die erste, dritte und fünfte Windung (11) der Welle (5) mit einem Pfeil und einem Bezugszeichen 11 versehen. Diese Windungen (11) können im Sinne der Erfindung vorzugsweise auch als Gewindegänge bezeichnet werden.

### Bezugszeichenliste

- 1: Staubsammelvorrichtung
- 2: Sammelbehälter
- 3: Filter
- 4: Lamellen
- 5: Welle
- 6: axiale Bewegung
- 7: Freigabemittel
- 8: Drehgriff
- 9: Gehäuse
- 10: Eingangsbereich
- 11: Windungen

## Patentansprüche

1. Staubsammelvorrichtung (1) für eine Werkzeugmaschine, wobei die Staubsammelvorrichtung (1) einen Sammelbehälter (2) zur Aufnahme von Staub aufweist,
**dadurch gekennzeichnet, dass**
in dem Sammelbehälter (2) ein Filter (3) mit Lamellen (4) und eine drehbare Welle (5) angeordnet vorliegen, wobei die Lamellen (4) des Filters (3) durch eine Drehbewegung der Welle (5) in eine axiale Bewegung (6) aus einer Ursprungsposition heraus versetzbar sind, wobei die Welle (5) Freigabemittel (7) aufweist, die eine Rückkehr der Lamellen (4) in ihre Ursprungsposition ermöglichen, wobei durch die Rückkehr der Lamellen (4) in ihre Ursprungsposition eine Abreinigung des Filters (3) erfolgt.

2. Staubsammelvorrichtung (1) nach Anspruch 1,
**dadurch gekennzeichnet, dass**
die Welle (5) eine Schneckenwelle ist und Windungen (11) aufweist.

3. Staubsammelvorrichtung (1) nach Anspruch 1 oder 2,
**dadurch gekennzeichnet, dass**
die Welle (5) Schlüsselflächen als Freigabemittel (7) aufweist.

4. Staubsammelvorrichtung (1) nach einem der vorhergehenden Ansprüchen,
**dadurch gekennzeichnet, dass**
der Sammelbehälter (2) einen Drehgriff (8) aufweist, wobei der Drehgriff (8) dazu eingerichtet ist, die Welle (5) in eine Drehung zu versetzen.

5. Staubsammelvorrichtung (1) nach Anspruch 4,
**dadurch gekennzeichnet, dass**
der Drehgriff (8) in einem Gehäuse (9) des Sammelbehälters (2) vorliegt.

6. Staubsammelvorrichtung (1) nach einem der vorhergehenden Ansprüchen,
**dadurch gekennzeichnet, dass**
der Filter (3) in einem Eingangsbereich (10) des Sammelbehälters (2) der Staubsammelvorrichtung (1) angeordnet vorliegt.

7. Werkzeugmaschine
**dadurch gekennzeichnet, dass**
die Werkzeugmaschine eine Staubsammelvorrichtung (1) nach einem der vorhergehenden Ansprüche aufweist.

8. Werkzeugmaschine nach Anspruch 7
**dadurch gekennzeichnet, dass**
die Werkzeugmaschine eine Staubabsaugung umfasst, wobei die Staubabsaugung dazu eingerichtet ist, einen Luftstrom zu erzeugen, mit dem Staub abgeführt wird.

9. Verfahren zum Betrieb einer Werkzeugmaschine und zur Abreinigung eines Filters (3) **gekennzeichnet durch die folgenden Verfahrensschritte:**
a) Betrieb der Werkzeugmaschine nach einem der Ansprüche 7 oder 8, wobei Staub, der bei Betrieb der Werkzeugmaschine entsteht, mittels eines Luftstroms abgeführt wird,
b) Filtern des Staubs aus dem Luftstrom mit einem Filter (3),
c) Initiierung der Abreinigung des Filters (3) durch Betätigung eines Drehgriffs (8) an einer Staubsammelvorrichtung (1), wobei durch die Betätigung des Drehgriffs (8) eine Welle (5) innerhalb der Staubsammelvorrichtung (1) in eine Drehung versetzt wird,
d) Übertragung der Drehbewegung der Welle (5) in eine axiale Bewegung (6) von Lamellen (4) des Filters (3), wobei die Lamellen (4) des Filters (3) durch die axiale Bewegung (6) eine Ursprungsposition verlassen,
e) Rückkehr der Lamellen (4) des Filters (3) in ihre Ursprungsposition, wenn die Lamellen (4) in einen Bereich von Freigabemitteln (7) der Welle (5) gelangen,
f) Abreinigung des Filters (3) durch die Rückkehr der Lamellen (4) in ihre Ursprungsposition.

10. Verfahren nach Anspruch 9
**dadurch gekennzeichnet, dass**
der Staub, der bei Betrieb der Werkzeugmaschine entsteht, in einem Sammelbehälter (2) der Staubsammelvorrichtung (1) gesammelt wird.
